# EUROPEAN PATENT SPECIFICATION

(11) **EP 3 034 354 B1**
(45) Date of publication and mention of the grant of the patent: **30.10.2019**
(21) Application number: 15275262.2
(22) Date of filing: 15.12.2015
(51) Int. Cl.: B60P 1/02, B60P 3/04

(54) **LOCK APPARATUS AND METHOD OF USE THEREOF**
VERRIEGELUNGSVORRICHTUNG UND VERFAHREN ZUR VERWENDUNG DAVON
APPAREIL DE SUPPORT ET SON PROCÉDÉ D'UTILISATION

(30) Priority: 16.12.2014 GB 201422354
(43) Date of publication of application: 22.06.2016
(73) Proprietor: Plowman Brothers Limited, York, Yorkshire YO61 1ER (GB)
(72) Inventor: PLOWMAN, Matt, York, Yorkshire YO61 1ER (GB); PLOWMAN, Richard, York, Yorkshire YO61 1ER (GB); RALPH, Jamie, York, Yorkshire YO26 5HN (GB)
(74) Representative: Wood, Graham

(56) References cited:
- EP-A1- 2 662 240
- EP-A2- 0 953 478

## Description

The invention to which this application relates is apparatus for use in a transportable storage area such as, but not necessarily exclusively a storage area which may be provided as an integral part of a vehicle or as a trailer which is attached to the vehicle. In either case the livestock is transported in the same. In particular, the invention relates to the provision of locking apparatus for use in the selective locking of one or more movable floors in the storage area at a selected height to suit the particular livestock to be transported, loading requirements and/or the ability to unload and load the said livestock.

Large vehicles, generally in the form of articulated vehicles, are commonly used to transport livestock from one place to another. Often, the storage area in which the livestock are located is used to transport different types of livestock on different journeys. For example, a particular storage area may be used, in a first instance, to transport cattle. Due to the relative size of the cattle and the storage area in which they will be loaded, there may only be room for the cattle to be spread across two floors or decks within the storage area. On a subsequent journey, the same storage area may be used to transport smaller livestock, such as sheep, pigs and/or the like. Consequently, there is more room within the storage area for additional floors to accommodate an increased number of the livestock. In order to meet this need, storage areas are provided with folding floors or decks. When not in use, the storage area comprises one or two fixed floors or decks sufficient to accommodate livestock such as cattle. When smaller livestock is to be loaded on such a storage area, one or two additional folding floors can be folded out within the storage area into an in use position. However, a problem arises with the folding floors in that once they were folded out into the in-use position, they are fixed in position, and vertical movement of the floors is not possible.

Storage areas with moving floors are also known and which are typically moved by the use of hydraulic systems and control solenoids. A particular floor can be moved to a desired vertical position and held in place by a solenoid or hydraulic pin and/or the like which extends outwardly from the moving floor and into a recess located in the framework of the storage area, thereby supporting the floor in its particular position. However, problems with this type of apparatus can be caused when livestock become unsettled within the storage area and begin to rear up or move about as it is found that this sudden movement can cause the solenoids or pins to move from their locked positions, causing the floor to move or become unstable at a particular point. This problem results in obvious hazards, especially when the livestock are in transit, as the entire storage area may become unbalanced, thereby making the vehicle unsafe to drive and be hazardous for the animals.

A further problem with the known movable floor storage areas is that the control means for movement and retaining the floors at a selected height are complex and require relatively extensive operator intervention to, firstly, control the powered movement of the floor and, secondly, to implement the engagement of the means to lock the floor in position and, importantly ensure that the engagement is retained and thereby maintains the safety of animals on the floor and below the same.

Thus, existing livestock storage areas use either; hydraulic; pneumatic; electric; which typically are centrally activated by an operator using a control means interface which has a series of user selectable buttons which are required to be operated in the correct sequence in order to achieve the safe operation of the decks and locking means, or manually operated deck locks are provided. In each case input and interaction is required by the operator to operate the locks, in addition to, the input and interaction which is required to actually raise or lower the deck to engage or disengage the same. The centrally activated locks add weight to the vehicle because of the quantity of pipes, hoses, wires and actuators needed, and they also need to be activated by the user to engage or disengage. The manually operated form of lock takes a long time to engage and/or disengage. Document EP0953478 discloses apparatus which allows relative movement of the deck with respect to locking apparatus to cause engagement of the deck.

There is therefore a need to find new means and methods of providing moving decks within storage areas which are capable of supporting significant and moving weights and do not dislodge their supports or become unstable upon sudden movement of livestock contained within.

It is therefore an aim of the present invention to provide a locking apparatus that overcomes the aforementioned problems in the prior art and a method of manufacturing the same. It is yet a further aim of the present invention to provide a method of using a locking apparatus that overcomes the aforementioned problems in the prior art.

It is a yet further aim of the present invention to provide a trailer having a locking apparatus for a moving floor that overcomes the aforementioned problems in the prior art.

According to a first aspect of the present invention there is provided a lock apparatus for a deck which is movable to adjust its height with respect to a floor of a storage area, said lock apparatus is caused to engage to prevent the deck being lowered below the lock apparatus, by raising the deck to a first position with respect to the lock apparatus, and the lock apparatus is caused to disengage by raising the deck to a second position, thereby allowing the deck to be freely raised or lowered characterised in that the first position is at a height at, or a first distance above, the lock apparatus and the second position is a second, greater, distance above the lock apparatus.

Typically one or both of the engagement and/or disengagement of the lock apparatus occurs automatically upon movement of the deck to the first and second positions respectively.

Typically an individual locking position or multiple locking positions can be provided.

Typically the lock apparatus is entirely mechanically operated. Typically the deck movement is powered.

Typically once the deck is moved to the first position the deck is thereafter lowered to be prevented moving further lower by the engaged lock apparatus.

Typically, once the deck has been moved to the second position the deck can then continue in an upward direction to a greater height from the fixed floor, or may be lowered downwardly and past the said locking apparatus, which is in a disengaged position, to a lower height.

Typically the engagement and release of the locking apparatus is achieved remotely by an operator by controlling the movement of the deck and therefore the only intervention required from the operator is to control the powered movement of the deck to the required height with respect to the floor.

In one embodiment the locking apparatus includes a locking arm, connected to and movable with respect to a support means; said locking arm having a locking portion located thereon for receipt and release of a locking member provided on the deck; said locking member movable with respect to said locking arm and support means from at least a first unlocked position to a locked position; and wherein said movement urges said locking arm, from an at rest position, in a first direction with respect to the support means.

In one embodiment, said locking arm is biased to said rest position with respect to the support means.

In one embodiment, said locking arm is movable, from said rest position, in a first direction away from said rest position, and in a second direction away from said rest position. Typically, said first and second directions are substantially opposite directions.

In one embodiment, biasing means are provided to bias the locking arm to said rest position. Typically, said biasing means are provided in the form of one or more springs. Further typically, at least to springs may be provided. Yet further typically, said at least two springs each provide a biasing force opposing one another, thereby biasing the support arm to the rest position.

In one embodiment, said first direction is a direction substantially away from said support means, such that said locking member is located between said locking portion and said support means during movement from said first unlocked position to said locked position.

In one embodiment, said locking portion includes a cradle portion arranged to receive said locking member when in the locked position. Typically, said cradle portion is defined by a lip and an opposing wall, located on said locking portion. Further typically, said cradle portion has an inner profile corresponding to an outer profile of said locking member.

In one embodiment, said locking arm is urged in said first direction by said locking member until said locking member passes the lip of said cradle portion. Typically, said locking arm is biased substantially towards the rest position as said locking member passes the lip of said cradle portion. Further typically, biasing movement substantially towards the rest position is halted by contact of the wall of said cradle portion with said locking member.

In one embodiment, the wall of the cradle portion is provided at an acute angle with respect to the direction of movement of said locking member, when in the locked position.

In one embodiment, movement of said locking member is substantially linear. Typically, said linear movement is substantially vertical.

Thus, the locking member is retained in the cradle portion of the locking portion safely and securely by one, or a combination of, features, including the provision of a matching profile between the cradle and the locking member such that the locking member can be received flush within the cradle; the biasing force of the locking arm towards the rest position maintaining the locking member in position between the support means and the wall of the cradle; and the acute angle of the cradle which is provided so as to urge the locking member into the cradle portion.

In one embodiment said locking arm is pivotally connected to said support means. Typically movement of said locking arm with respect to said support means is substantially rotational.

In one embodiment, said locking portion is formed on said locking arm. Typically said locking portion extends outwardly from said locking arm. Further typically said locking portion extends outwardly from the locking arm in a direction parallel to the axis of rotation of said locking arm.

In one embodiment said locking member is movable from the locked position to a second unlocked position. Typically, said locked position is located substantially between said first and second unlocked positions. Further typically, said locked position and said first and second unlocked positions are located on a substantially linear path.

In one embodiment, movement of said locking member from the locked position to the second unlocked position urges the locking arm in the first direction. Typically, as said locking member moves clear of the locking portion, said locking arm is biased to the rest position.

In one embodiment, said locking member is movable from the second unlocked position to the first unlocked position. Typically said locking member is movable from the second unlocked position directly to the first unlocked position, bypassing the locked position.

In one embodiment, movement of said locking member from said second unlocked position to said first unlocked position urges said locking arm, from the at rest position, in the second direction with respect to the support means. Typically, said second direction is a direction substantially towards said support means, such that said locking arm is located between said locking member and said support means during movement from the second unlocked position to the first unlocked position.

In one embodiment, said locking arm is biased to the at rest position as the locking member returns to the first unlocked position.

Further typically, the locking apparatus is provided as part of a storage area for a vehicle.

In one embodiment, said locking member is in the form of a pin, bar and/or the like. Typically, said pin, bar and/or the like protrudes outwardly from a deck or floor portion, to which it is connected.

Typically there is provided a vehicle having a storage area including at last one lock apparatus as herein described. Typically the storage area is defined by opposing side walls, opposing end walls (one of which includes a door and opening), a roof and a floor, and at least one deck which is movable vertically within the storage area along guide means located on the side walls, and can be retained at at least one height by the provision of a set of lock apparatus at the said height.

Typically a plurality of lock apparatus are provided at a specific height at spaced locations around the goods storage area to form a set of lock apparatus.

In one embodiment a number of sets of lock apparatus are provided at different heights so as to allow the selective location of the deck at one of the number of said heights.

In one embodiment a number of movable decks are provided, each capable of being moved to selected heights.

In one embodiment a number of the locking apparatus are provided at the same height such that the deck is supported at a fixed height by a number of the locking apparatus.

In a further aspect of the present invention there is provided a method of using a lock apparatus to selectively retain a movable deck at a fixed height with respect to a floor of a transportable storage area, said method including the steps of moving the deck past the location of the lock apparatus to a first position to automatically engage the lock apparatus and prevent the deck from being lowered past the lock apparatus and moving the deck to a second position, to automatically disengage the lock apparatus and allow the deck to then be raised, or lowered to a position below the lock apparatus and characterised in that the said first position is a height at, or a first distance above, the lock apparatus and the said second position is a second, greater, distance above the lock apparatus.

In one embodiment a locking member of the lock apparatus is moved by the movement of the deck to bring the member into contact with a locking arm of the lock apparatus in a first unlocked position at the desired height, and the movement of the deck urges the locking arm away from an at rest position, further moving the deck until said locking arm moves in a second, direction and receives the locking member and locks the deck at the said fixed height.

In one embodiment the deck and locking member is moved a first distance above the locking apparatus to a first position and then lowered to the fixed height with the lock apparatus and to release the deck, the same is moved upwardly to a second distance from the locking apparatus which is greater than the first distance from the locking apparatus.

In one embodiment, movement of said locking member is with the deck and is substantially linear. Typically, said linear movement is substantially vertical and, to engage with the locking apparatus, it is moved a first distance above the locking apparatus to a first position and then lowered to the engaged position with the locking apparatus. Typically, to release the deck the same is moved upwardly to a second position which is at a greater distance from the locking apparatus than the first distance from the locking apparatus.

Thus, the locking member follows a predetermined path of movement from the first unlocked position to the locked position and, subsequently, on to the second unlocked position and back to the first unlocked position. The locking apparatus according to the present invention therefore prevents reverse movement of the locking member along the predetermined path. This is particularly advantageous in an example where the locking member forms a part of a moving deck or floor within a container, storage area and/or the like because the pressure/weight of items/livestock to be located on such a deck or floor will favour reverse movement, which is prevented by the locking member resting on the cradle portion. This also helps to maintain the locking member in the locked position in a safe and secure manner, with little or no risk of the locking member becoming dislodged, thereby overcoming the problems associated with the prior art, as discussed above.

In one embodiment, said locking arm is located at least partially within support means which is one embodiment may be provided as part of the guide means along which the deck. The movement of the deck under power is typically via electric or hydraulic movement means in a conventional manner. Typically, a first end of said locking arm protrudes outwardly of said support means. Further typically, a second end of said locking arm is pivoted within said support means.

Further typically, said pivotal movement is at least partially restricted and, in one embodiment, is at least partially restricted by the provision of at least two, opposing side faces on said locking portion.

In one embodiment, said locking arm is biased to engage said locking member.

In one embodiment, biasing means are provided to bias the locking arm to engage said locking member. Typically, said biasing means are provided in the form of at least one spring.

In one embodiment, said locking member is arranged to pass over the formations in one direction, upon movement of the locking member with respect to the locking portion. Typically, said locking arm is movable from the first unlocked position to the locked position in one direction, and direct movement from the locked position to the first unlocked position is substantially blocked by at least one of said formations.

In one embodiment, each of said formations allows the locking member to pass thereover in one direction. Typically, movement of the locking member over said formations urges the movement of the locking arm against the biasing force of said biasing means.

In one embodiment, at least one of said formations provides a cradle portion in which the locking member rests when in the locked position. Typically, said cradle portion prevents movement of said locking member from the locked position to the first unlocked position.

In one embodiment, said cradle portion is formed substantially towards one side of the support means.

In one embodiment, said locking member is movable from the locked position to a second unlocked position. Typically, when in said second unlocked position, the locking member is movable in one of at least two possible directions.

In one embodiment, said first direction is towards a further formation and cradle portion, and the second direction provides a guide path to the first unlocked position. Typically, said guide path is located adjacent said cradle portion. Further typically, said guide path is formed substantially towards an opposing side of the support means from that of the cradle portion.

In one embodiment, said support means is connected to and forming part of a moving deck or floor within a housing. Typically, said housing forms at least a part of a storage area for a vehicle or, alternatively, said housing forms a storage portion of a vehicle. Alternatively, said support means is formed integrally with a moving deck or floor within a housing.

In one embodiment, said locking member is in the form of a pin, bar and/or the like. Typically, said pin, bar and/or the like protrudes outwardly from the deck or floor portion to which it is connected, engaging the locking portion.

In one embodiment, said locking portion is provided as a substantially vertical member located on, or forming part of, a wall or support surface of a housing.

Thus, the lock apparatus provides a locking member that follows a predetermined path of movement from the first unlocked position to the locked position and, subsequently, on to a second unlocked position, and either back to the first unlocked position or onto a further locked position. The locking apparatus according to the present invention therefore prevents reverse movement of the locking member along the predetermined path. This is particularly advantageous in an example where the locking member forms a part of a moving deck or floor within a container, storage area and/or the like because the pressure/weight of items/livestock to be located on such a deck or floor will favour reverse movement, which is prevented by the locking member resting on the cradle portion. This also helps to maintain the locking member in the locked position in a safe and secure manner, with little or no risk of the locking member becoming dislodged, thereby overcoming the problems associated with the prior art, as discussed above.

Embodiments of the present invention will now be described with reference to the accompanying figures, wherein:
Figures 1a - k illustrate the locking and unlocking motion of a locking apparatus in accordance with an embodiment of the present invention;
Figure 2 illustrate a perspective view of a locking apparatus in accordance with an embodiment of the present invention;
Figure 3 illustrates a view of a locking apparatus fixed within a structure during a locking phase in accordance with an embodiment of the present invention;
Figure 4 illustrates a view of a locking apparatus fixed within a structure during an unlocking phase in accordance with an embodiment of the present invention;
Figures 5a - r illustrate various locking and unlocking stages i)-xii) of an alternate locking apparatus in accordance with an embodiment of the present invention;
Figures 6a - e illustrate a top view of various locking and unlocking stages i)-xii) of an alternate locking apparatus in accordance with an embodiment of the present invention; and
Figure 7 illustrates schematically a vehicle with which the invention can be implemented in accordance with one embodiment.

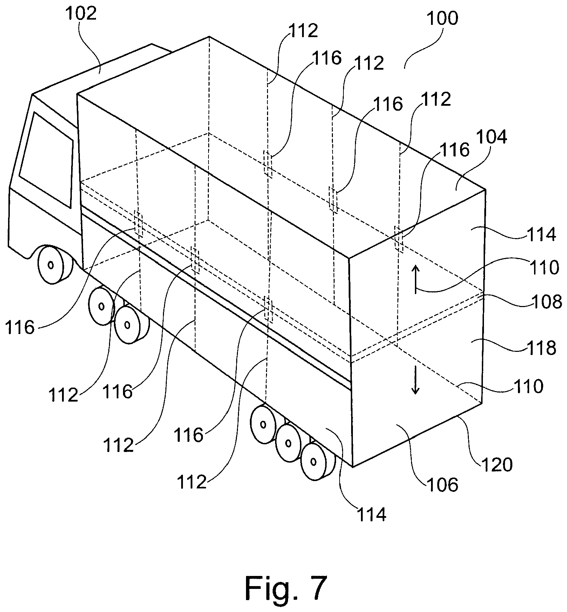

Referring firstly to Figure 7 there is illustrated a livestock transport vehicle 100. Said vehicle includes a cab 102 in which the operator sits to drive the vehicle and to the rear of the same there is provided a livestock transport area 104 in which different types of livestock can be moved. In accordance with the invention the transport area, in one embodiment, includes a fixed floor or base 106 and a movable deck 108 which can be moved to selected vertical positions as indicated by arrows 110. In order to move the deck the same is powered to be moved along guide means 112 on the side walls 114. In accordance with the invention, locking apparatus 116 is provided at at least one predetermined height, or a number of the locking apparatus may be provided at a plurality of heights. The purpose of the locking apparatus is to ensure that the deck can be retained at the required height once the deck has been moved to the position of the locking apparatus. Access to and from the storage area is typically via the rear door 118 which can be moved about hinge 120 between open and closed positions.

In accordance with the invention the operator only has to control the movement of the deck along the guide means to the required height as the engagement and disengagement of the locking apparatus, and hence retention or release of the deck position, is achieved automatically by the relative movement between the deck and components of the locking apparatus.

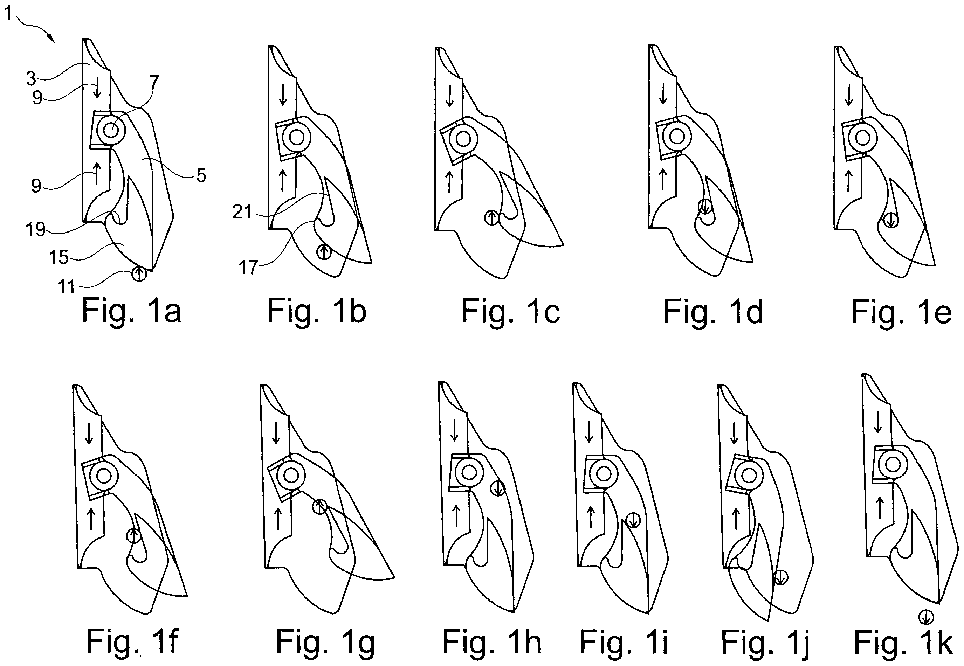

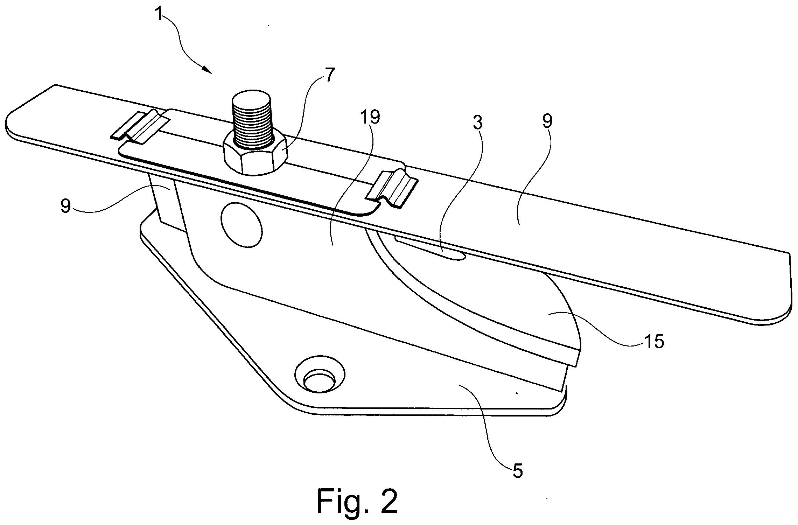

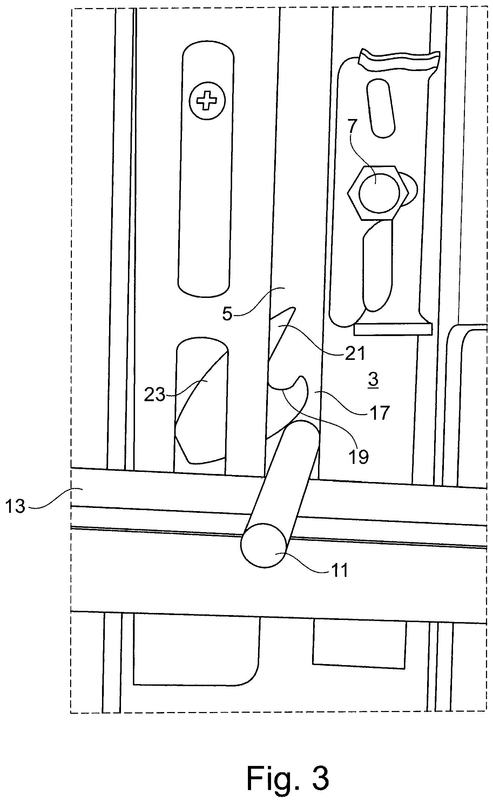

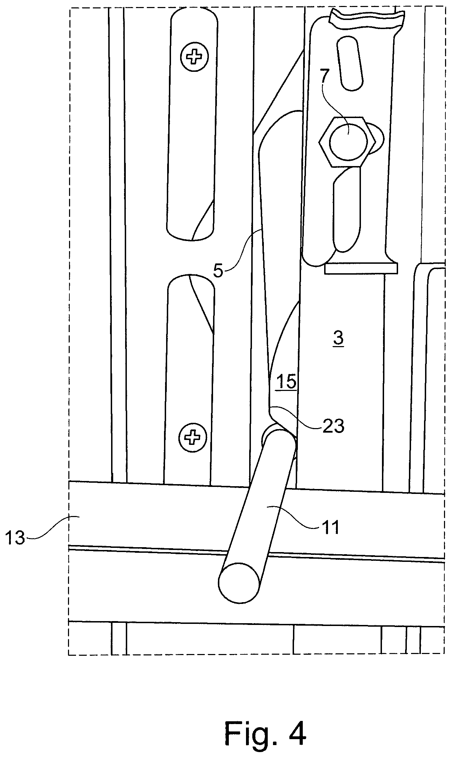

The operation of the locking apparatus in a first embodiment is now described with reference to Figures 1 - 4 in which there is shown a locking apparatus (1) for use with the moving deck or floor. The locking apparatus (1) has support means (3) which are mounted on the side wall of the storage area at a fixed position and at a selected height at which the deck is to be located. A locking arm (5) is attached to the support means (3). The locking arm (5) is pivotally attached to the support means via a pivot point (7), thereby allowing rotational movement of the arm (5) with respect to the support means (3). The arm (5) is biased towards a rest position, as depicted in Figures 1a, h and k, by biasing members in the form of a pair of springs (9), arranged to have an equal and opposing force, maintaining the arm (5) in the rest position. This arrangement allows for the arm (5) to rotate about the pivot (7) and away from the rest position in either direction. A locking member in the form of a pin (11), shown in Figure 1 and more clearly in Figures 3 and 4, is arranged to engage the locking arm (5) initially from a lowermost position (Figure 1a). The pin (11) is connected to or formed integrally with the moving deck (not shown). Figures 3 and 4 show, by way of example, the pin (11) fixed to a frame of a moving deck (13). The deck (13) and pin (11) are arranged to move vertically up and down with respect to the locking apparatus (1). The locking arm (5) has a further locking portion (15) located at a lower end thereon. The locking portion (15) has a curved lower edge, corresponding to the equivalent lower edge of the arm (5). The curved lower edge of the locking portion terminates at a lip (17), which serves to define a cradle portion (19) formed on the locking portion (15). At the opposing side of the cradle (19) there is a wall (21) extending to an upper point of the locking portion (15). From this point, the top side of the locking portion (15) curves round to meet the lower point of the locking portion (15), forming an outward side (23) of the locking portion (15).

From a first, unlocked position, as shown in Figure 1a, pin (11) is moved in an upward direction, engaging the locking arm (5) and/or locking portion (15). Continued upward movement of the pin (11) urges the arm (5) to rotate in a direction outwardly of the support means (3) (see Figures 1b and 3) until it reaches the lip (17) of the cradle (19) (Figure 1c), at which point the pin is temporarily clear of the locking portion (15). At this stage the springs (9) bias the locking arm back towards the rest position until the wall (21) contacts the pin (11) (Figure Id), preventing any further return movement. The pin (11) may subsequently rest in the cradle (19) securely, in a locked position (Figure 1e).

The pin (11) may only be moved from the locked position in one way: upwardly. In doing so, the arm (5) is urged outwardly once more, due to engagement between the pin (11) and the wall (21) (Figures 1f-g). As the pin (11) moves clear and into a second unlocked position, the arm (5) is biased back to the rest position by the springs (9) (Figure 1h). At this point the pin (11) may be moved in two directions: either upwardly and onto a further locking apparatus, denoting a subsequent/higher deck or floor position; or downwardly, to the initial unlocked position. This downward motion is depicted by Figures 1i-j and 4, wherein downward movement of the pin (11) engages the outward side (23) of the locking portion, urging the locking arm inwardly of the support means (3) until it moves clear and, ultimately, back to the first unlocked position, wherein the springs subsequently bias the locking arm back to the rest position (Figure 1k).

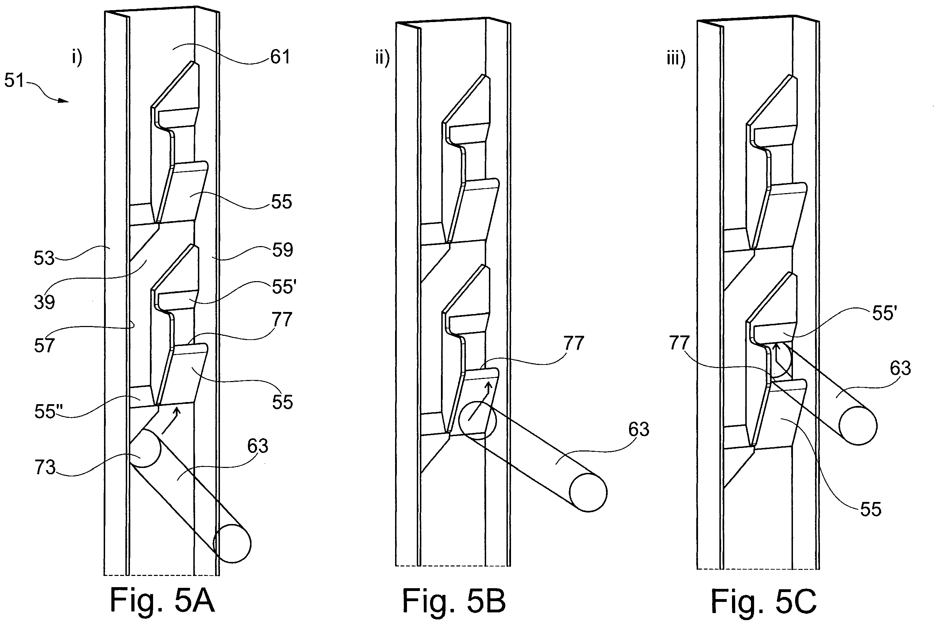

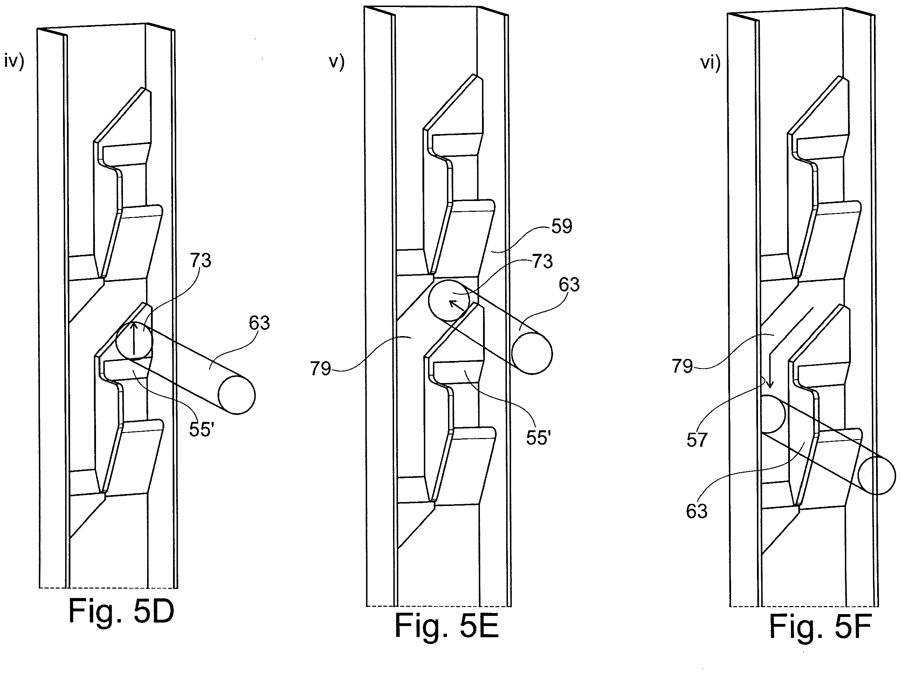

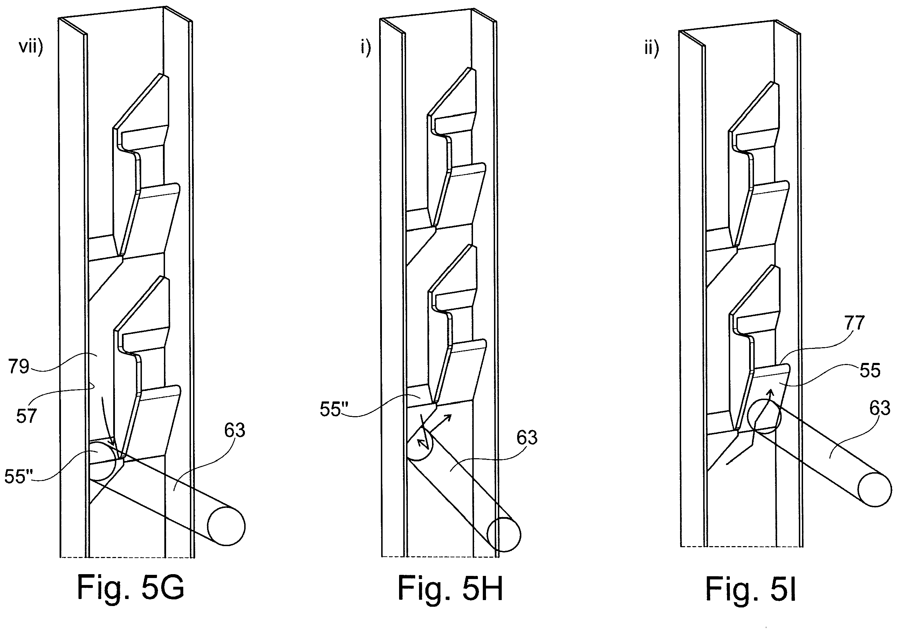

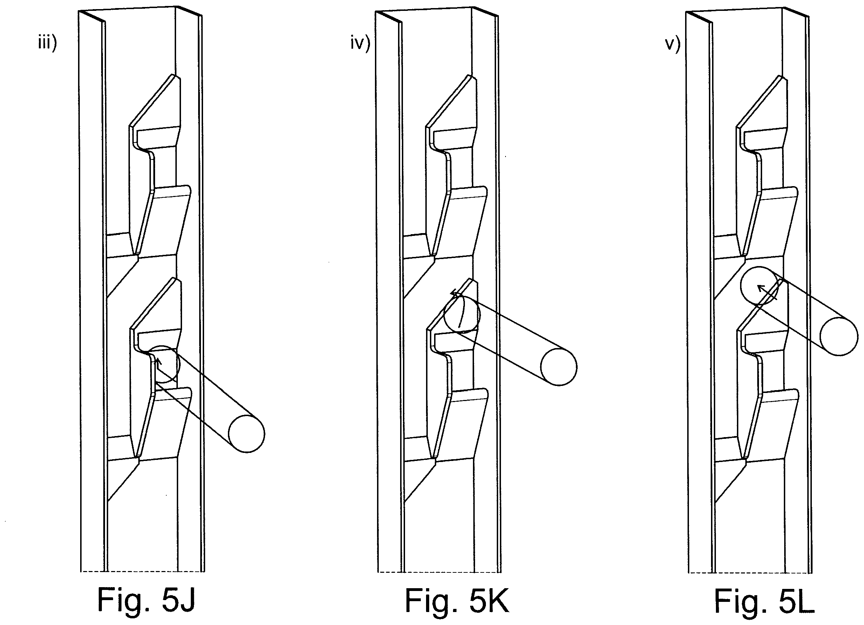

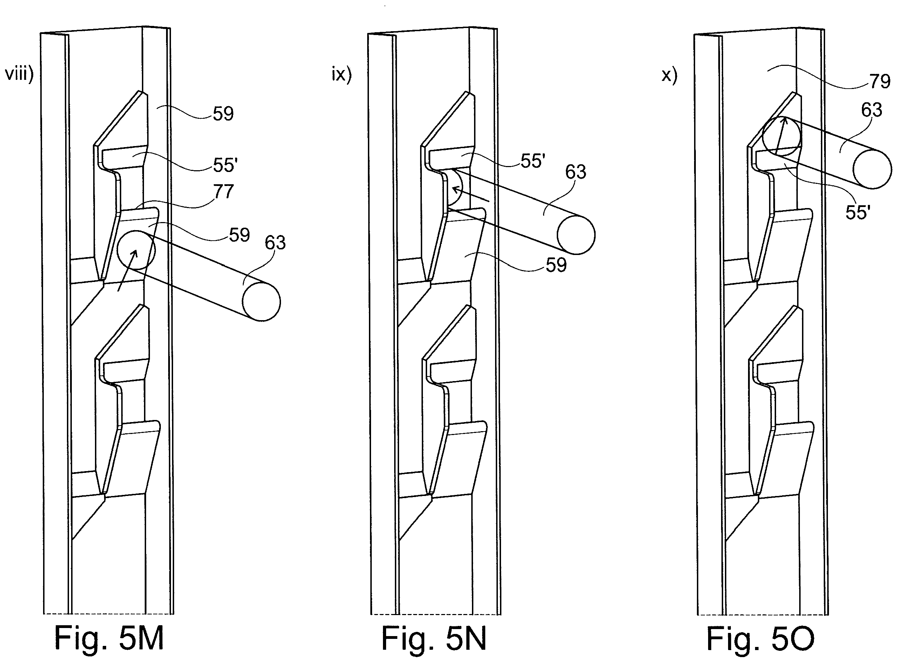

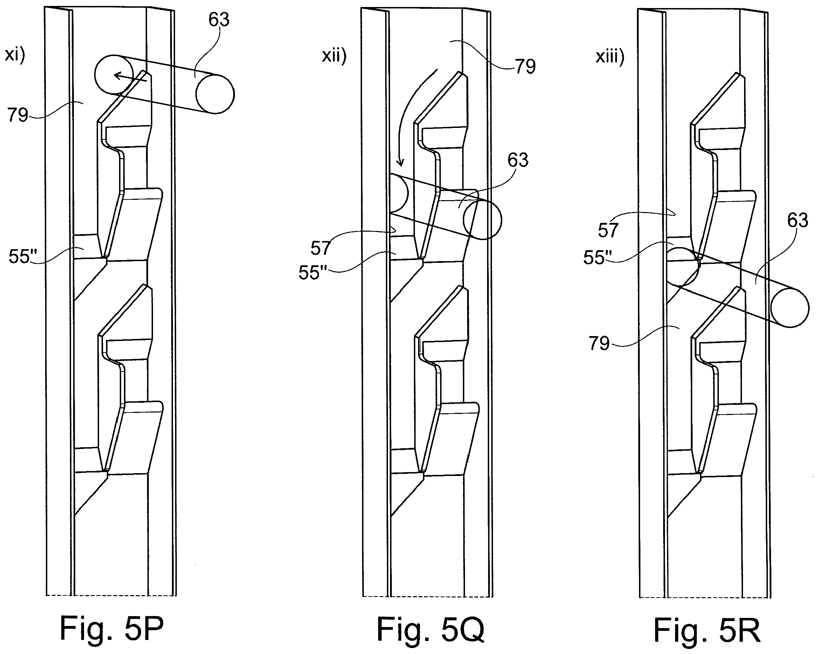

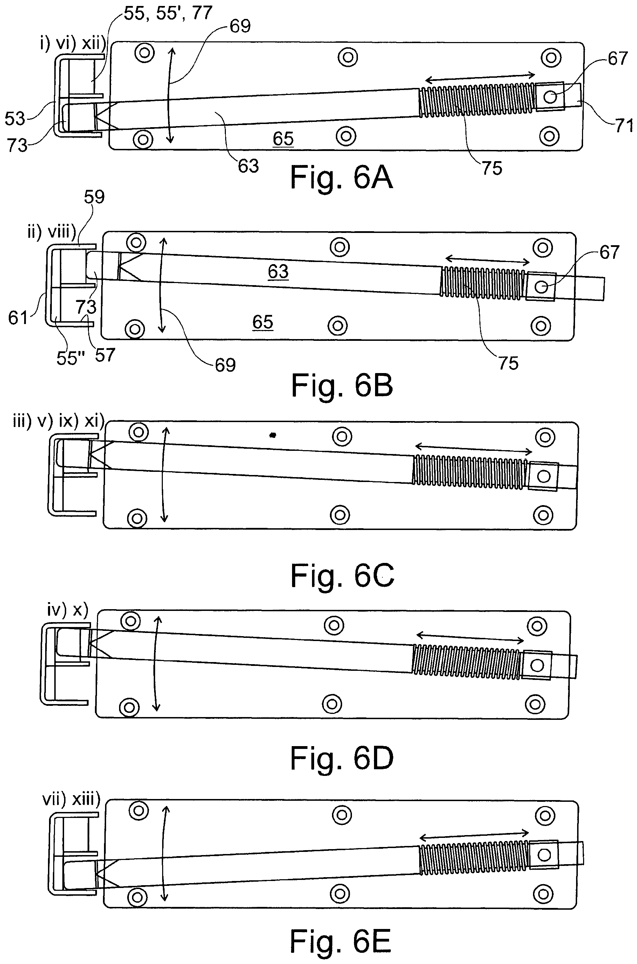

Referring now to Figures 5 - 6, there is provided an alternative embodiment of a locking apparatus (51) for use, in particular, with a moving deck or floor in a storage area portion of an articulated vehicle. The locking apparatus (51) includes a locking portion (53) having a number of formations (55) located thereon. The locking portion (53) is a linear member with a three-sided profile: two opposing side faces (57, 59) and a central face (61) opposing an open end. The locking member (53) will generally be provided as a vertical member within a storage area, vehicle and/or the like in which the moving deck or floor will be located. The formations (55) are located on the central face (61), protruding towards the open end. A locking member in the form of a pin (63) is arranged to engage the locking portion (53) and the formations (55) initially from a lowermost position (Figures 5a - b). The pin (63) is formed within a support means (65), shown in Figure 6, which is connected to or formed integrally with a moving deck or floor (not shown). The pin (63) and support (65) are movable relative to the locking portion (53) in a substantially vertical direction, wherein upon movement the pin (63) engages the various formations (55), which allow the pin (63) to proceed only along a predetermined path within the locking portion (53).

The pin (63) is further movable with respect to the support means (65) in that it is pivotally movable about a pivot point (67) formed on the support means (65). Such a pivoting movement allows the pin (63) to move laterally from one side of the locking portion (53) to another, as guided by the formations (55). The lateral movement (69) is restricted by the side faces (57, 59) of the locking portion (53). The pivot point (67) is located substantially towards a rear end (71) of the pin (63) and away from a front end (73) of the pin (63), said end (73) being that which engages the formations (55) and locking portion (53). The pin (63) is further movable relative to the support means (65) in that it is biased by a spring (75), located along the longitudinal length of the pin (63), such that the front end (73) protrudes outwardly of the support means (65) and engages the locking portion (53) and formations (55). As the pin (63) and support means (65) are moved vertically, the pin (63) passes over the formations (55) which urge the pin (63) inwardly of the support means (65).

The formations (55) allow movement of the pin (63) thereover in one direction. Therefore, movement of the pin (63) from a first unlocked position (Figure 5a) to a locked position (Figure 5c) over a formation (55) (Figure 5b) is permitted in one direction only and direct movement backed to the first unlocked position is prevented as the pin (63) is biased outwardly by the spring (75) as it passes over the first formation (55) and into a cradle portion (77), wherein the pin (63) may rest securely in the locked position (Figure 5c). From the locked position, the pin (63) is movable in only one direction, over a further formation (55') (Figure 5d) and subsequently into a second unlocked position (Figure 5e) after it moves clear of the said formation (55'). As will be noted, formations (55, 55') and cradle portion (77) are located to one side of the locking portion (53), adjacent side face (59). As the pin (63) moves to the second unlocked position (Figure 5e), it falls into a guide path (79). At this point, it is possible to move the pin (63) in one of two directions: up or down. This depends on whether a user wants to raise the pin (63) and, therefore, the deck or floor to which it is associated, to a higher level; or whether the user wants to lower the deck or floor back to the starting point of the first unlocked position (Figure 5a).

If it is desired to lower the deck or floor back to the first unlocked position, the pin (63) is lowered by following the guide path (79), which urges the pin (63) around the formations (55, 55') and cradle portion (77) and down a side of the locking portion (53) adjacent side (57) (Figure 5f). The pivoting movement of the pin (63) about the pivot point (67) allows such lateral movement within the locking portion (53), as urged by the formations and guide path. As it is lowered, the pin (63) encounters a further formation (55") which again permits movement in one direction only - downwards (Figure 5g). This ensures that any upward movement of the pin (63) has to pass over each consecutive cradle portion (77) when moving up several floor positions, and that each floor position can therefore be met. As the pin (63) passes over the formation (55"), it finishes back at the original first unlocked position (Figure 5h). Figures 5i - 1 depict movement of the pin (63) back up to the second unlocked position and, from this point, the second option available to the user is to move the pin (63) up to a further locking level and locked position, a depicted in Figures 5m - n. The pin (63) may then be lowered back to the first unlocked position, via the guide path (79), in the manner discussed above and depicted in Figures 5o - r. For further clarity, each different position in which the pin is depicted is defined by roman numerals. These roman numerals are also highlighted throughout Figures 6a - e, in order to highlight the lateral position of the pin (63) at each stage of the locking and unlocking process.

The invention therefore provides lock apparatus for the height of a movable deck, typically of a transportable storage area for use with livestock. The deck includes at least one but typically several locking members that follow a predetermined path of movement with the deck as it is moved to a first position to automatically engage with the remainder of the lock apparatus and prevent the deck from being lowered below the height of the lock apparatus. The deck can then be moved upwardly disengage the lock apparatus and from there the deck can be raised or lowered freely. The lock apparatus therefore allows automatic engagement and release of the deck by powered movement of the deck, whilst ensuring that the deck is maintained in the locked position so as to provide the deck in a maintained load carrying position for as long as required when the same is not powered for movement which is particularly advantageous where the deck is used to support heavy goods, such as livestock.

## Claims

1. A lock apparatus (1;51;116) for a deck (13;108) which is movable to adjust its height with respect to a floor (106) of a storage area (104), said lock apparatus is caused to engage to prevent the deck (13;108) being lowered below the lock apparatus (1;51;116), by raising the deck (13;108)to a first position with respect to the lock apparatus (1;51;116), and the lock apparatus is caused to disengage by raising the deck (13;108) to a second position, thereby allowing the deck (13;108) to be freely raised or lowered **characterised in that** the first position is at a height at, or a first distance above, the lock apparatus and the second position is a second, greater, distance above the lock apparatus (1;51;116).

2. Apparatus according to claim 1 wherein one or both of the engagement and/or disengagement of the lock apparatus occurs automatically upon movement of the deck to the first and second positions respectively.

3. Apparatus according to any of the preceding claims wherein the lock apparatus includes a locking arm (5), connected to and movable with respect to a support means; said locking arm having a locking portion located thereon for receipt and release of a locking member provided on the deck which is movable with respect to said locking arm and support means from at least a first unlocked position to a locked position; and wherein said movement urges said locking arm from an at rest position in a first direction with respect to the support means.

4. Apparatus according to claim 3 wherein said locking arm is movable from said rest position, to which the same is biased, in a first direction away from said rest position, and in a second direction, substantially opposing the first direction.

5. Apparatus according to any of claims 3 or 4 wherein said locking portion includes a cradle portion (19, 77) arranged to receive said locking member when in the locked position and said locking arm is urged in said first direction by said locking member until said locking member passes a lip of said cradle portion.

6. Apparatus according to claim 5 wherein the locking member is retained in the cradle portion by one, or a combination of, the provision of a matching profile between the cradle and the locking member; the biasing force of the locking arm towards the rest position and/or an acute angled wall of the cradle.

7. Apparatus according to claim 3 wherein the locking arm is pivotally connected to said support means and movement of said locking arm with respect to said support means is substantially rotational.

8. Apparatus according to claim 3 wherein the locking member is movable from the locked position to a second unlocked position and said locked position is located substantially between said first and second unlocked positions.

9. Apparatus according to any of claims 3-8 wherein the movement of said locking member from the locked position to the second unlocked position urges the locking arm in the first direction and as said locking member moves clear of the locking portion, said locking arm is biased to the rest position

10. Apparatus according to any of claims 3-8 wherein said locking member is movable from the second unlocked position to the first unlocked position directly and bypassing the locked position.

11. Apparatus according to claim 1 wherein a plurality of lock apparatus are provided as at least one set, said at least one set provided at a first height in the storage area

12. Apparatus according to claim 1 wherein guide means for the movement of the deck therealong are provided and said lock apparatus locates with the said guide means

13. Apparatus according to any of the preceding claims wherein the lock apparatus is provided as part of a storage area for connection with, or as part of a, vehicle.

14. A method of using a lock apparatus (1;51;116) to selectively retain a movable deck (13;108) at a fixed height with respect to a floor (106) of a transportable storage area (104), said method including the steps of moving the deck (13;108) past the location of the lock apparatus (1;51;116) to a first position to automatically engage the lock apparatus (1;51;116) and prevent the deck (13;108) from being lowered past the lock apparatus (1;51;116) and moving the deck (13;108) to a second position, to automatically disengage the lock apparatus (1;51;116) and allow the deck (13;108) to then be raised, or lowered to a position below the lock apparatus (1;51;116) and **characterised in that** the said first position is a height at, or a first distance above, the lock apparatus (1;51;116) and the said second position is a second, greater, distance above the lock apparatus (1;51;116).

## Patentansprüche

1. Verriegelungsvorrichtung (1; 51; 116) für ein Deck (13; 108), das beweglich ist, um seine Höhe relativ zu einem Boden (106) eines Lagerbereichs (104) zu justieren, wobei bewirkt wird, dass die genannte Verriegelungsvorrichtung in Eingriff gebracht wird, um zu verhindern, dass das Deck (13; 108) unter die Verriegelungsvorrichtung (1; 51; 116) abgesenkt wird, durch Anheben des Decks (13; 108) in eine erste Position relativ zu der Verriegelungsvorrichtung (1; 51; 116), und wobei bewirkt wird, dass die Verriegelungsvorrichtung gelöst wird, indem das Deck (13; 108) in eine zweite Position angehoben wird, um es dadurch zuzulassen, das Deck (13; 108) frei zu heben oder zu senken, **dadurch gekennzeichnet, dass** die erste Position in einer Höhe an, oder in einer ersten Distanz über, der Verriegelungsvorrichtung ist und die zweite Position in einer zweiten, größeren, Distanz über der Verriegelungsvorrichtung (1; 51; 116) ist.

2. Vorrichtung nach Anspruch 1, wobei eines oder beides aus Ineingriffbringen und/oder Lösen der Verriegelungsvorrichtung automatisch nach einer Bewegung des Decks jeweils in die erste bzw. zweite Position erfolgt.

3. Vorrichtung nach einem der vorherigen Ansprüche, wobei die Verriegelungsvorrichtung einen Verriegelungsarm (5) aufweist, der mit einem Tragmittel verbunden und relativ dazu beweglich ist; wobei sich auf dem genannten Verriegelungsarm ein Verriegelungsabschnitt zum Aufnehmen und Freisetzen eines Verriegelungselements befindet, das an dem Deck vorgesehen ist, das relativ zu dem genannten Verriegelungsarm und dem Tragmittel von wenigstens einer ersten entriegelten Position in eine verriegelte Position beweglich ist; und wobei die genannte Bewegung den genannten Verriegelungsarm von einer Ruheposition in einer ersten Richtung mit Bezug auf das Tragmittel drückt.

4. Vorrichtung nach Anspruch 3, wobei der genannte Verriegelungsarm von der genannten Ruheposition, in die er vorgespannt ist, in einer ersten Richtung weg von der genannten Ruheposition und in einer zweiten Richtung im Wesentlichen entgegengesetzt zu der ersten Richtung beweglich ist.

5. Vorrichtung nach Anspruch 3 oder 4, wobei der genannte Verriegelungsabschnitt einen Ablageteil (19, 77) aufweist, der zum Aufnehmen des genannten Verriegelungselements ausgelegt ist, wenn es in der verriegelten Position ist, und der genannte Verriegelungsarm in der genannten ersten Richtung durch das genannte Verriegelungselement gedrückt wird, bis das genannte Verriegelungselement eine Lippe des genannten Ablageteils passiert.

6. Vorrichtung nach Anspruch 5, wobei das Verriegelungselement in dem Ablageteil durch eines aus, oder eine Kombination aus, dem Vorsehen eines passenden Profils zwischen der Ablage und dem Verriegelungselement; der Vorspannkraft des Verriegelungsarms in Richtung der Ruheposition und/oder einer spitzwinkligen Wand der Ablage gehalten wird.

7. Vorrichtung nach Anspruch 3, wobei der Verriegelungsarm schwenkbar mit dem genannten Tragmittel verbunden ist und eine Bewegung des genannten Verriegelungsarms relativ zu dem genannten Tragmittel im Wesentlichen rotational ist.

8. Vorrichtung nach Anspruch 3, wobei das Verriegelungselement von der verriegelten Position in eine zweite entriegelte Position beweglich ist und die genannte verriegelte Position sich im Wesentlichen zwischen der genannten ersten und zweiten entriegelten Position befindet.

9. Vorrichtung nach einem der Ansprüche 3-8, wobei die Bewegung des genannten Verriegelungselements von der verriegelten Position in die zweite entriegelte Position den Verriegelungsarm in der ersten Richtung drückt, und während sich das genannte Verriegelungselement vom Verriegelungsteil weg bewegt, der genannte Verriegelungsarm in die Ruheposition vorgespannt wird.

10. Vorrichtung nach einem der Ansprüche 3-8, wobei das genannte Verriegelungselement von der zweiten entriegelten Position in die erste entriegelte Position direkt und unter Umgehung der verriegelten Position beweglich ist.

11. Vorrichtung nach Anspruch 1, wobei mehrere Verriegelungsvorrichtungen als wenigstens ein Satz vorgesehen sind, wobei der genannte wenigstens eine Satz in einer ersten Höhe in dem Lagerbereich vorgesehen ist.

12. Vorrichtung nach Anspruch 1, wobei Führungsmittel für die Bewegung des Decks daran entlang vorgesehen sind und die genannte Verriegelungsvorrichtung mit dem genannten Führungsmittel lokalisiert wird.

13. Vorrichtung nach einem der vorherigen Ansprüche, wobei die Verriegelungsvorrichtung als Teil eines Lagerbereichs zur Verbindung mit, oder als Teil eines, Fahrzeug(s) vorgesehen ist.

14. Verfahren zum Benutzen einer Verriegelungsvorrichtung (1; 51; 116) zum selektiven Halten eines beweglichen Decks (13; 108) in einer festen Höhe relativ zu einem Boden (106) eines transportierbaren Lagerbereichs (104), wobei das genannte Verfahren die folgenden Schritte beinhaltet: Bewegen des Decks (13; 108) am Ort der Verriegelungsvorrichtung (1; 51; 116) vorbei in eine erste Position, um die Verriegelungsvorrichtung (1; 51; 116) automatisch in Eingriff zu bringen und zu verhindern, dass das Deck (13; 108) an der Verriegelungsvorrichtung (1; 51; 116) vorbei abgesenkt wird, und Bewegen des Decks (13; 108) in eine zweite Position, um die Verriegelungsvorrichtung (1; 51; 116) automatisch zu lösen und dann ein Anheben des Decks (13; 108) oder ein Absenken des Decks in eine Position unter der Verriegelungsvorrichtung (1; 51; 116) zuzulassen, und **dadurch gekennzeichnet, dass** die genannte erste Position in einer Höhe an oder in einer ersten Distanz über der Verriegelungsvorrichtung (1; 51; 116) ist und die genannte zweite Position in einer zweiten, größeren Distanz über der Verriegelungsvorrichtung (1; 51; 116) ist.

## Revendications

1. Appareil de verrouillage (1 ; 51 ; 116) pour une plate-forme (13 ; 108) qui est mobile afin d'ajuster sa hauteur par rapport à un plancher (106) d'une aire de stockage (104), ledit appareil de verrouillage étant amené à être emboîté pour empêcher la plate-forme (13 ; 108) d'être abaissée en dessous de l'appareil de verrouillage (1 ; 51 ; 116), en relevant la plate-forme (13 ; 108) jusqu'à une première position par rapport à l'appareil de verrouillage (1 ; 51 ; 116), et l'appareil de verrouillage est amené à être désemboîté en relevant la plate-forme (13 ; 108) jusqu'à une deuxième position, ce qui permet ainsi à la plate-forme (13 ; 108) d'être librement relevée ou abaissée, **caractérisé en ce que** la première position se trouve à une hauteur au niveau de, ou à une première distance au-dessus, de l'appareil de verrouillage et la deuxième position est une deuxième distance, plus grande, au-dessus de l'appareil de verrouillage (1 ; 51 ; 116).

2. Appareil selon la revendication 1 dans lequel une action, ou les deux, parmi l'emboîtement et/ou le désemboîtement de l'appareil de verrouillage se produit automatiquement lors d'un mouvement de la plate-forme vers les première et deuxième positions respectivement.

3. Appareil selon n'importe laquelle des revendications précédentes dans lequel l'appareil de verrouillage inclut un bras de verrouillage (5) raccordé à et mobile par rapport à un moyen de support ; ledit bras de verrouillage possédant une partie de verrouillage située sur celui-ci pour la réception et la libération d'un élément de verrouillage prévu sur la plate-forme qui est mobile par rapport audit bras de verrouillage et au moyen de support depuis au moins une première position déverrouillée jusqu'à une position verrouillée ; et dans lequel ledit mouvement pousse ledit bras de verrouillage depuis une position au repos dans un premier sens par rapport au moyen de support.

4. Appareil selon la revendication 3 dans lequel ledit bras de verrouillage est mobile depuis ladite position de repos, vers laquelle celui-ci est sollicité, dans un premier sens en éloignement depuis ladite position de repos, et dans un deuxième sens, substantiellement à l'opposé du premier sens.

5. Appareil selon n'importe laquelle des revendications 3 ou 4 dans lequel ladite partie de verrouillage inclut une partie berceau (19, 77) agencée de façon à recevoir ledit élément de verrouillage lorsqu'il se trouve dans la position verrouillée et ledit bras de verrouillage est poussé dans ledit premier sens par ledit élément de verrouillage jusqu'à ce que ledit élément passe devant une lèvre de ladite partie berceau.

6. Appareil selon la revendication 5 dans lequel l'élément de verrouillage est retenu dans la partie berceau par une, ou une combinaison de la mise à disposition d'un profil concordant entre le berceau et l'élément de verrouillage ; la force de sollicitation du bras de verrouillage étant vers la position de repos et/ou une paroi en angle aigu du berceau.

7. Appareil selon la revendication 3 dans lequel le bras de verrouillage est raccordé de manière pivotante audit moyen de support et le mouvement dudit bras de verrouillage par rapport audit moyen de support est substantiellement une rotation.

8. Appareil selon la revendication 3 dans lequel l'élément de verrouillage est mobile depuis la position verrouillée jusqu'à une deuxième position déverrouillée et ladite position verrouillée est située substantiellement entre lesdites première et deuxième positions déverrouillées.

9. Appareil selon n'importe laquelle des revendications 3 à 8 dans lequel le mouvement dudit élément de verrouillage depuis la position verrouillée jusqu'à la deuxième position déverrouillée pousse le bras de verrouillage dans le premier sens et au fur et à mesure que ledit élément de verrouillage se déplace sans être au contact de la partie de verrouillage, ledit bras de verrouillage est sollicité à la position de repos.

10. Appareil selon n'importe laquelle des revendications 3 à 8 dans lequel ledit élément de verrouillage est mobile depuis la deuxième position déverrouillée jusqu'à la première position déverrouillée directement et en contournant la position verrouillée.

11. Appareil selon la revendication 1 dans lequel une pluralité d'appareils de verrouillage sont prévus sous la forme d'au moins un ensemble, ledit au moins un ensemble étant prévu au niveau d'une première hauteur dans l'aire de stockage.

12. Appareil selon la revendication 1 dans lequel sont prévus des moyens de guidage pour le mouvement de la plate-forme le long de celle-ci et ledit appareil de verrouillage se met en place avec lesdits moyens de guidage.

13. Appareil selon n'importe laquelle des revendications précédentes dans lequel l'appareil de verrouillage est prévu en tant que partie d'une aire de stockage pour un raccordement avec, ou comme faisant partie d'un véhicule.

14. Procédé d'utilisation d'un appareil de verrouillage (1 ; 51 ; 116) pour retenir sélectivement une plate-forme mobile (13 ; 108) au niveau d'une hauteur fixe par rapport à un plancher (106) d'une aire de stockage transportable (104), ledit procédé incluant les étapes consistant à déplacer la plate-forme (13 ; 108) par-devant l'emplacement de l'appareil de verrouillage (1 ; 51 ; 116) jusqu'à une première position afin de s'emboîter automatiquement avec l'appareil de verrouillage (1 ; 51 ; 116) et pour empêcher la plate-forme (13 ; 108) d'être abaissée par-devant l'appareil de verrouillage (1 ; 51 ; 116) et à déplacer la plate-forme (13 ; 108) jusqu'à une deuxième position, afin de se désemboîter automatiquement de l'appareil de verrouillage (1 ; 51 ; 116) et permettre à la plate-forme (13 ; 108) d'être ensuite relevée, ou abaissée jusqu'à une position en dessous de l'appareil de verrouillage (1 ; 51 ; 116) et **caractérisé en ce que** ladite première position se trouve à une hauteur au niveau de, ou à une première distance au-dessus de l'appareil de verrouillage (1 ; 51 ; 116) et ladite deuxième position est une deuxième distance, plus grande, au-dessus de l'appareil de verrouillage (1 ; 51 ; 116).
